# EUROPEAN PATENT SPECIFICATION

(11) **EP 0 449 280 B1**
(45) Date of publication and mention of the grant of the patent: **09.11.1994**
(21) Application number: 91104932.8
(22) Date of filing: 27.03.1991
(51) Int. Cl.: F16D 27/112, F16D 27/16

(54) **Electromagnetic clutch**
Elektromagnetische Kupplung
Embrayage électromagnétique

(30) Priority: 30.03.1990 JP 81301/90
(43) Date of publication of application: 02.10.1991
(73) Proprietor: SANDEN CORPORATION, Isesaki-shi Gunma, 372 (JP)
(72) Inventor: Matsushita, Takashi, 20 Kotobuki-cho, Isesaki-shi, Gunma 372 (JP); Sunaga, Yoshitaka, 20 Kotobuki-cho, Isesaki-shi, Gunma 372 (JP); Yoshizawa, Kouki, 20 Kotobuki-cho, Isesaki-shi, Gunma 372 (JP); Hoshino, Seiichi, 20 Kotobuki-cho, Isesaki-shi, Gunma 372 (JP)
(74) Representative: Prüfer, Lutz H., Dipl.-Phys.

(56) References cited:
- WO-A-88/09447
- FR-A- 1 530 785
- FR-A- 2 559 222
- GB-A- 368 945
- US-A- 1 671 057

## Description

This invention relates to an electromagnetic clutch according to the preamble of claim 1, in particular for use in a refrigerant compressor for an automotive air-conditioning system, and more particularly to an electromagnetic clutch that includes an apparatus for interrupting the transmission of the driving force from an automobile engine to the compressor when the compressor becomes locked.

An automotive air-conditioning system includes a refrigerant circuit comprising a refrigerant compressor, a condenser, an expansion valve and an evaporator , which are connected in series. A driving force for driving the compressor is derived from an automobile engine and is transmitted to the compressor through a transmitting device, such as a driving belt which is received by the respective pulleys or rotors associated with the automobile engine and the compressor.

In general, the rotor associated with the compressor forms a part of an electromagnetic clutch which can intermittently transmit the driving force from the automobile engine to the compressor by virtue of intermittent energization of an electromagnetic coil of the electromagnetic clutch. The electromagnetic coil of the clutch intermittently energizes in response to a thermodynamic characteristic of the refrigerant circuit, such as temperature of air leaving from the evaporator. The intermittent energization of the electromagnetic coil conducts the intermittent operation of the compressor. Thereby, temperature in a passenger compartment of the automobile can be maintained at a certain value.

In recent years, in order to effectively utilize the restricted vacant space in an automobile engine compartment, the respective pulleys or rotors associated with the automobile engine and the devices deriving the driving force thereof from the automobile engine ( such as an automobile generator, an oil hydraulic pump used for a power assisted steering wheel, another oil hydraulic pump used for a power assisted foot braking system and the refrigerant compressor) receive only one driving belt.

However, when a driven device of the compressor, such as a drive shaft stops its rotational motion due to an unexpected trouble of the component parts of the compressor while the rotor frictionally engages with an armature plate which is directly connected to the drive shaft, a frictional surface of the rotor slides on a frictional surface of the armature plate so that intensive frictional heat is generated therebetween. The intensive frictional heat generated between the frictional surfaces of the rotor and the armature plate is conducted to a bearing which rotatably supports the drive shaft, and may cause seizure thereof. The seizure of the bearing accelerates the generation of the intensive frictional heat between the frictional surfaces of the rotor and the armature plate. As a result, the driving belt is not able to endure the intensive frictional heat, and is burntly torn up at last. The torn up of the driving belt places the other devices, which derive the driving force thereof from the automobile engine, in an unoperational condition.

In order to resolve this defect, Japanese Utility Model Application Publication No. 57-25222 discloses an electromagnetic clutch including a device which can immediately release the engagement between the rotor and the armature plate when the compressor becomes locked.

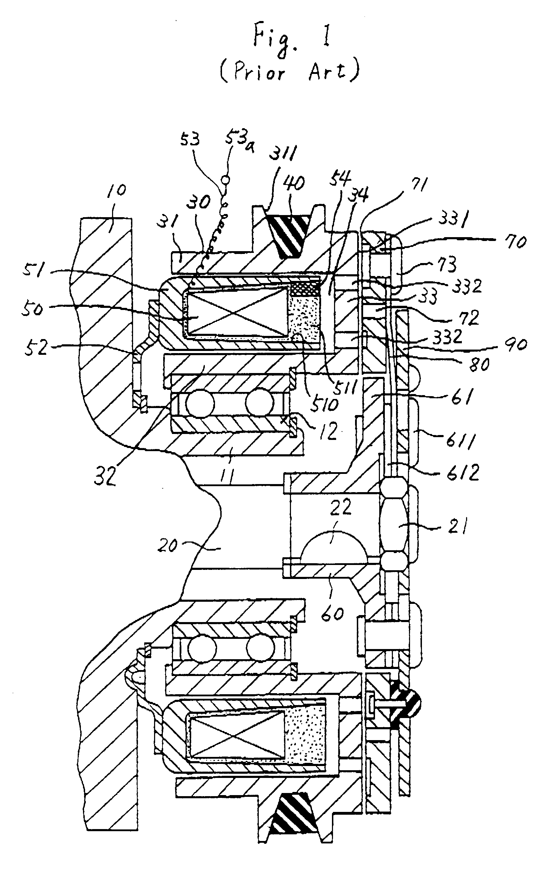

The electromagnetic clutch according to the above-mentioned prior art is assembled on the refrigerant compressor for an automotive air-conditioning system. Referring to Figure 1, compressor housing 10 is provided with tubular extension 11 which surrounds drive shaft 20 of the compressor. Drive shaft 20 is rotatably supported in compressor housing 10 by a bearing (not shown).

Rotor 30 is rotatably supported on tubular extension 11 through bearing 12 which is mounted on an outer surface of tubular extension 11. Rotor 30 is made of magnetic material, such as steel, and comprises outer annular cylindrical portions 31, inner annular cylindrical portion 32 and axial end plate portion 33 connecting outer and inner cylindrical portion 31, 32 at a right side end. Annular cavity 34 is thus defined between portions 31, 32 and 33. An annular V-belt groove 311 is formed on an outer peripheral surface of outer cylindrical portion 31 for receiving V-belt 40 for coupling the compressor to the engine of the automobile (not shown). Axial end plate portion 33 has a frictional surface 331 formed on its outer surface and includes one or more concentric slits 332 to define a plurality of annular or arcuate pieces.

An annular housing 51 having a U-shaped cross section is disposed in annular cavity 34 of rotor 30. An electromagnetic coil 50 is contained within annular housing 51. Housing 51 is fixed to a supporting plate 52, which is secured to an axial end surface of compressor housing 10 by a plurality of rivets (not shown). Annular housing 51 is thus maintained within cavity 34 without contacting rotor 30. A thermal detecting element 54 including a fusible metal is disposed in a right end portion of annular cavity 510 defined by annular housing 51 so as to be adjacent to axial end plate portion 33 of rotor 30. Cavity 510 is filled with heated epoxy resin 511, which is hardened by elapsing time with cooling, so as to fixedly and insulatedly dispose coil 50 and thermal detecting element 54 therewithin. Thermal detecting element 54 is connected in series with electromagnetic coil 50 between a battery (not shown) and ground. One terminal end of thermal detecting element 54 is connected to the battery, and the other terminal end of thermal detecting element 54 is connected to one terminal end of coil 50. The other terminal end of coil 50 is connected to one terminal end of wire 53 which is led from a bottom end portion of annular housing 51. The other terminal end 53a of wire 53 is connected to one terminal end of another wire (not shown) led from a control apparatus (not shown) of the automotive air-conditioning system.

A hub 60 is disposed on a terminal end of drive shaft 20 and secured to drive shaft 20 by nut 21 and key 22. Hub 60 is provided with flange portion 61 extending radially outwardly from an axial end portion of hub 60. Annular armature plate 70 is concentrically disposed around an outer surface of hub 60 so as to face axial end plate portion 33 of rotor 30 with a predetermined axial air gap. Armature plate 70 also comprises frictional surface 71 to face frictional surface 331 of rotor 30 and is provided with one or more slits 72 to define a plurality of annular or arcuate magnetic pieces. Armature plate 70 is elastically connected to flange portion 61 of hub 60 through a plurality of leaf springs 80. One end portion of each leaf spring 80 is secured on the outer end surface of armature plate 70 by rivet 73. The other end portion of leaf spring 80 is secured on an axial end surface of flange portion 61 of hub 60 by rivet 611 together with stopper plate 90 and washer 612.

In the above construction of the electromagnetic clutch, if coil 50 is not energized, armature plate 70 is separated from rotor 30 by the recoil strength of leaf springs 80.

When electromagnetic coil 50 is energized, magnetic flux is induced and flows through a closed loop comprising coil 50 housing 51, rotor 30 and armature plate 70. Armature plate 70 is thus magnetically attracted to frictional surface 331 of rotor 30 and springs 80 are bent in the axial direction. Therefore, the rotating movement of the engine is transmitted to drive shaft 20 of the compressor through rotor 30, armature plate 70, leaf springs 80 and hub 60. When the compressor becomes locked while armature plate 70 is contact with rotor 30, frictional surface 331 of axial end plate portion 33 of rotor 30 slides on frictional surface 71 of armature plate 70. Intensive frictional heat is thus caused by this sliding frictional contact between rotor 30 and armature plate 70. Rotor 30 and armature plate 70 are heated rapidly, and the frictional heat conducting from the frictional surfaces between armature plate 70 and rotor 30 exceeds the melting point of the fusible metal of thermal detecting element 54, the fusible metal will melt. Thereby, the flow of current from the battery to coil 50 is disconnected so that coil 50 is deenergized. Accordingly, armature plate 70 separates from frictional surface 331 of axial end plate portion 33 of rotor 30 by the recoil strength of leaf springs 80. Therefore, rotor 30 idly rotates so that V-belt 40 can be prevented from the torn up. Thus, the function of the other devices which derive the driving force thereof from the automobile engine can be maintained in a normal condition even when the refrigerant compressor becomes locked.

However, since thermal detecting element 54 is disposed in the right end portion of annular cavity 510 of annular housing 51, the size of coil 50 must be reduced in comparison with the volume of cavity 510, thereby decreasing the magnetic attraction force which acts between rotor 30 and armature plate 70. Furthermore, thermal detecting element 54 may erroneously operate due to the breaking of the fusible metal caused by the intensive vibration which propagates to or is generated at the electromagnetic clutch.

The electromagnetic clutch of the preamble of claim 1 is known from the US-A-1 671 057. The two coils therein are connected in parallel or in series depending on the rotational speed of the clutch.

Accordingly, it is an object of the present invention is to provide an electromagnetic clutch including a device which can operate to interrupt the transmission of a driving force from an automobile engine to a refrigerant compressor when the refrigerant compressor becomes locked without a reduction of the size of an electromagnetic coil thereof.

It is another object of the present invention is to provide an electromagnetic clutch including a device which can operate to interrupt the transmission of a driving force from an automobile engine to a refrigerant compressor when the refrigerant compressor becomes locked even while the intensive vibration propagates to or is generated at the electromagnetic clutch.

The electromagnetic clutch according to the invention comprises the features of claim 1.

Special embodiments are specified in the subclaims.

Figure 1 illustrates a cross-sectional view of an electromagnetic clutch in accordance with one embodiment of a prior art.

Figure 2 illustrates a cross-sectional view of an electromagnetic clutch in accordance with a first embodiment of the present invention.

Figure 3 illustrates a circuit diagram of a control device which controls operation of the electromagnetic clutch shown in Figure 2.

Figure 4 illustrates a cross-sectional view of an electromagnetic clutch in accordance with a second embodiment of the present invention.

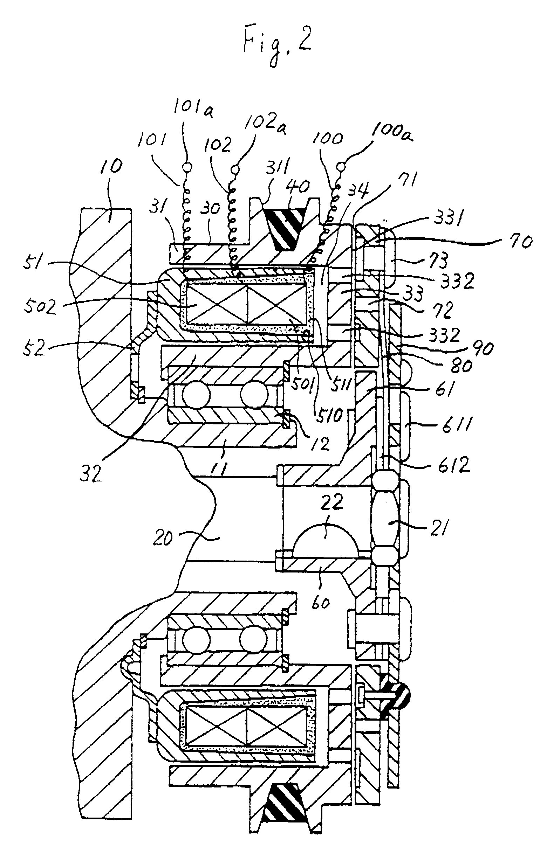

In Figures 2-4, the same numerals are used to denote the corresponding elements shown in Figure 1 so that an explanation thereof is omitted.

Referring to Figure 2, the construction of an electromagnetic clutch in accordance with a first embodiment of the present invention is illustrated. The electromagnetic clutch according to the first embodiment of the present invention is assembled on a refrigerant compressor which forms a part of an automotive air-conditioning system. The electromagnetic clutch includes first and second electromagnetic coils 501 and 502 disposed in cavity 510 of annular housing 51. From the right to the left, first and second coils 501, 502 are disposed in cavity 510 in order, so that first coil 501 is adjacent to axial end plate portion 33 of rotor 30.

One terminal end of first coil 501 is connected to one terminal end of first wire 100. The other terminal end of first coil 501 is connected to one terminal end of second coil 502. The other terminal end of second coil 502 is connected to one terminal end of second wire 101.

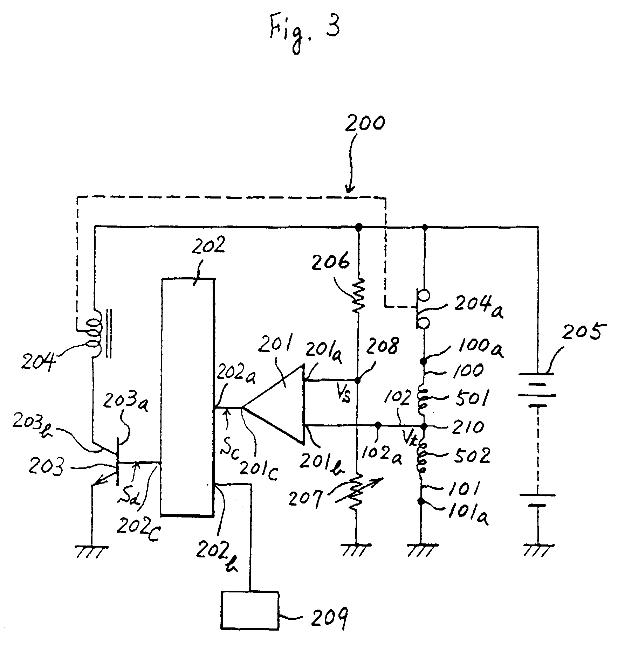

Referring to Figure 3 additionally, control device 200 for controlling operation of the electromagnetic clutch includes comparator 201, judging circuit 202, common-emitter type switching transistor 203 and electromagnetic relay 204 having normally closed contact 204a. First and second coils 501 and 502 are connected in series between battery 205 and ground. The other terminal end 100a of first wire 100 is connected to battery 205 through normally closed contact 204a. The other terminal end 101a of second wire 101 is grounded.

Resistor 206 and rheostat 207 are connected in series between battery 205 and ground. One terminal end of resistor 206 is connected to battery 205 and one terminal end of rheostat 207 is grounded. One input terminal 201a of comparator 201 is connected to point 208 between resistor 206 and rheostat 207. The other input terminal 201b of comparator 201 is connected the other terminal end 102a of third wire 102, of which one terminal end is connected to point 210 between first and second coils 501, 502. Output terminal 201c of comparator 201 is connected to one input terminal 202a of judging circuit 202. The other input terminal 202b of judging circuit 202 is connected to switching device 209 in which an automotive air-conditioning switch (not shown) and a thermistor switch (not shown) are connected in series. The thermistor switch is turned on in order to energize coils 501, 502 when temperature of air leaving from an evaporator, which forms a part of the automotive air-conditioning system, exceeds a predetermined value. Output terminal 202c of judging circuit 202 is connected to base 203a of transistor 203. Collector 203b of transistor 203 is connected to one terminal end of electromagnetic relay 204. The other terminal end of electromagnetic relay 204 is connected to one terminal end of resistor 206, thereby being connected to battery 205.

Voltage Vs at point 208 is adjusted by rheostat 207 to have predetermined value Vs1 which is smaller than voltage Vt at point 210 between first and, second coils 501, 502 at a time when the refrigerant compressor intermittently operates by a predetermined differential. Comparator 201 generates level 1 of binary signal Sc only when voltage Vt is smaller than predetermined value Vs1.

Control device 200 for controlling operation of the electromagnetic clutch performs as follows.

When the refrigerant compressor intermittently operates, voltage Vt at point 210 at a time both when frictional surface 331 of rotor 30 engages with frictional surface 71 of armature plate 70 and when frictional surface 331 of rotor 30 does not engage with frictional surface 71 of armature plate 70 is greater than predetermined value Vs1. Accordingly, comparator 201 generates level 0 of binary signal Sc, and sends it to judging circuit 202 from output terminal 201c thereof. When level 0 of binary signal Sc is received in judging circuit 202, Judging circuit 202 judges whether switching transistor 203 will be turned on or off with considering whether judging circuit 202 receives ON-signal from switching device 209 or not. When judging circuit 202 receives ON-signal from switching device 209, that is, when the temperature of air leaving from the evaporator exceeds the predetermined value while the automotive air-conditioning switch is turned on, judging circuit 202 generates level 0 of binary signal Sd, and sends it to base 203a of switching transistor 203 from output terminal 202c thereof. When base 203a of switching transistor 203 receives level 0 of binary signal Sd, switching transistor 203 is turned off so that electromagnetic relay 204 is deenergized. Deenergization of electromagnetic relay 204 keeps contact 204a closed so that coils 501, 502 are energized. Accordingly, rotor 30 and armature plate 70 keep the frictional engagement thereof. Therefore, the refrigerant compressor keeps its operation.

On the other hand, when Judging circuit 202 receives OFF-signal from switching device 209, that is, either when the temperature of air leaving from the evaporator does not exceed the predetermined value or when the automotive air-conditioning switch is turned off, judging circuit 202 generates level 1 of binary signal Sd and sends it to base 203a of switching transistor 203 from output terminal 202c thereof. When base 203a of transistor 203 receives level 1 of binary signal Sd, switching transistor 203 is turned on so that electromagnetic relay 204 is energized. Energization of electromagnetic relay 204 opens contact 204a, thereby deenergizing coils 501, 502. Accordingly, the frictional engagement between rotor 30 and armature plate 70 is released by virtue of the recoil strength of leaf springs 80. Therefore, the refrigerant compressor stops its operation.

When the refrigerant compressor becomes locked due to an unexpected trouble of the component parts thereof while rotor 30 frictionally engages with armature plate 70, frictional surface 331 of rotor 30 slides on frictional surface 71 of armature plate 70 so that intensive frictional heat is generated therebetween. The intensive frictional heat is conducted to first and second coils 501, 502 and causes an increase in electric resistance thereof. Since first coil 501 is disposed more closer to frictional surface 331 of rotor 30 than second coil 502, first coil 501 is more heated than second coil 502. Therefore, an amount of the increase in electric resistance of coil 501 is greater than an amount of the increase in electric resistance of coil 502. In result, voltage Vt at point 210 between first and second coils 501, 502 is reduced to a value which is smaller than predetermined value Vs1 so that comparator 201 generates level 1 of binary signal Sc, and sends it to judging circuit 202 from output terminal 201c thereof. When level 1 of binary signal Sc is received in judging circuit 202, judging circuit 202 judges whether switching transistor 203 will be turned on or off with considering whether judging circuit 202 receives ON-signal from switching device 209 or not. Even when judging circuit 202 receives ON-signal from switching device 209, that is, when the temperature of air leaving from the evaporator exceeds the predetermined value while the automotive air-conditioning switch is turned on, judging circuit 202 generates level 1 of binary signal Sd, and sends it to base 203a of switching transistor 203 from output terminal 202c thereof. When base 203a of switching transistor 203 receives level 1 of binary signal Sd, switching transistor 203 is turned on so that electromagnetic relay 204 is energized. Energization of electromagnetic relay 204 opens contact 204a, thereby deenergising coils 501, 502. Accordingly, the frictional engagement between rotor 30 and armature plate 70 is released by virtue of the recoil strength of leaf springs 80. Therefore, rotor 30 idly rotates so that V-belt 40 can be prevented from the torn up. Accordingly, the function of the other devices, which derive the driving force thereof from the engine, can be maintained in a normal condition.

In the present invention, annular cavity 510 of annular housing 51 is used for disposing only electromagnetic coils 501, 502 therein so that a reduction in the size of coils 501, 502 in comparison with the volume of cavity 510 can be prevented. Therefore, a decrease in the magnetic attraction force acting between rotor 30 and armature plate 70 can be prevented. Furthermore, even though the intensive vibration propagates to or is generated at the electromagnetic clutch, an erroneous operation of control device 200 due to the disconnection caused in control device 200 can be eliminated.

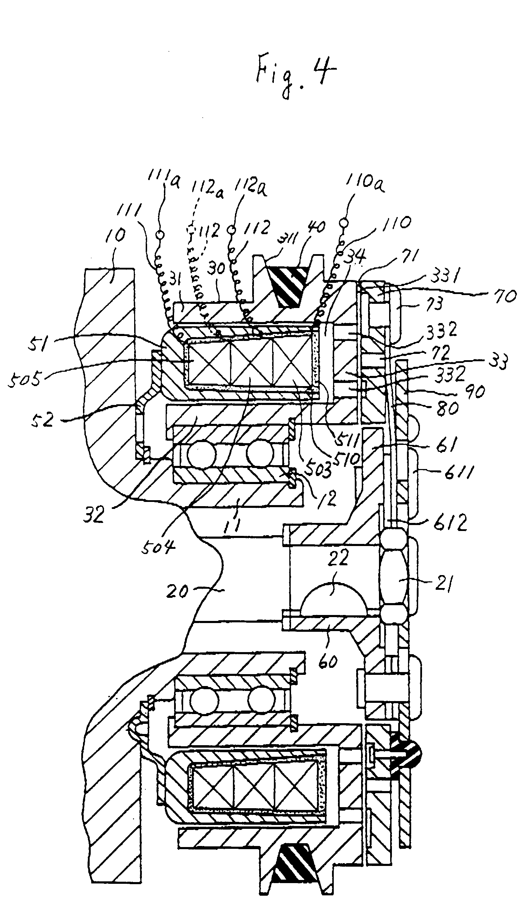

Referring to Figure 4, the construction of an electromagnetic clutch in accordance with a second embodiment of the present invention is illustrated. The electromagnetic clutch includes first, second and third electromagnetic coils 503, 504 and 505 disposed in cavity 510 of annular housing 51. From the right to the left, first, second and third coils 503, 504 and 505 are disposed in cavity 510 in order, so that first coil 503 is adjacent to axial end plate portion 33 of rotor 30. One terminal end of first coil 503 is connected to one terminal end of first wire 110. The other terminal end of first coil 503 is connected to one terminal end of second coil 504. The other terminal end of second coil 504 is connected to one terminal end of third coil 505. The other terminal end of third coil 505 is connected to one terminal end of second wire 111.

Referring to Figure 3 again, in this embodiment, first, second and third coils 503, 504 and 505 are connected in series between battery 205 and ground in place of first and second coils 501, 502 of the first embodiment. Therefore, the other terminal end 110a of first wire 110 is connected to battery 205 through normally close contact 204a, and the other terminal end 111a of second wire 111 is grounded. Either a point between first and second coils 503, 504 or a point between second and third coils 504, 505 is connected to one terminal end of third wire 112. The other terminal end 112a of third wire 112 is connected to the other input terminal 201b of comparator 201. An effect of this embodiment is similar to an effect of the first embodiment so that an explanation thereof is omitted.

Furthermore, in the first and second embodiments, the other terminal end of the first wire is connected to battery 205 through normally closed contact 204a, and the other terminal end of the second wire is grounded. However, in one alternative, the other terminal end of the second wire can be connected to battery 205 through normally closed contact 204a, and the other terminal end of the first wire can be grounded. In this alternative, voltage Vs at point 208 is adjusted by rheostat 207 to have predetermined value Vs2 which is greater than voltage Vt at a point either between the first and second coils or between the second and third coils at a time when the refrigerant compressor intermittently operates by a predetermined differential . Comparator 201 generates level 1 of binary signal only when voltage Vt is greater than predetermined value Vs2.

Still furthermore, in the above-mentioned embodiments, two or three electromagnetic coils are disposed in cavity 50 of annular housing 51. However, even when over three electromagnetic coils are disposed in cavity 510, an effect similar to the effect of the above-mentioned embodiments can be obtained by utilizing the thermal differential therebetween as described above.

This invention has been described in connection with the preferred embodiments. These embodiments, however, are merely for example only and the invention is not restricted thereto. It will be understood by those skilled in the art that other variations and modifications can easily made within the scope of this invention as defined by the claims.

## Claims

1. An electromagnetic clutch including a first rotatable member (30) having an axial end plate (33) of magnetic material, a second rotatable member (60), an armature plate (70) of magnetic material elastically connected to said second rotatable member (60) so that said armature plate (70) is capable of limited axial movement, said armature plate (70) facing said axial end plate (33) of said first rotatable member (30) with an axial air gap therebetween and an electromagnetic device associated with said first rotatable member (30) and operable to attract said armature plate (70) into contact with said axial end plate such that the rotation of said first rotatable member (30) can be transmitted to said second rotatable member (60) through said armature plate (70) when said electromagnetic device is activated, said electromagnetic device including at least two electromagnetic coils (501, 502; 503, 504, 505), said at least two magnetic coils being axially aligned;
characterized in that a thermal differential between one and the other electromagnetic coils of said at least two electromagnetic coils (501, 502; 503, 504, 505) is generated when heat is conducted to said electromagnetic device from a contact surface (331, 71) between said axial end plate (33) and said armature plate (70), said at least two electromagnetic coils (501, 502; 503, 504, 505) being connected in series between a battery (205) and ground, control means (200) being provided for controlling the connection and disconnection of said electromagnetic device to said battery (205), said control means (200) disconnecting said electromagnetic device to said battery (205) when said thermal differential exceeds a predetermined value while said electromagnetic device is activated.

2. The electromagnetic clutch according to claim 1, said control means including comparing mean (201), judging means (202) and switching means (203, 204, 204a), said comparing means (201) comparing a predetermined voltage with a voltage at a point between said one and said the other electromagnetic coils of said at least two electromagnetic coils, said comparing means (201) generating a first signal when a differential between said predetermined voltage with the voltage at the point between said one and said the other electromagnetic coils of said at least two electromagnetic coils exceeds a predetermined potential difference, said judging means (202) receiving a second signal which represents either said electromagnetic device is activated or said electromagnetic device is not activated, said judging means (202) judging whether said electromagnetic device will be disconnected to said battery or not with considering said second signal, said judging means (202) generating a third signal when said judging means receives said first signal while said judging means receives said second signal representing that said electromagnetic device is activated, said switching means (203, 204, 204a) disconnecting said electromagnetic device to said battery when said switching means receives said third signal.

3. The electromagnetic clutch according to claim 2 wherein said comparing means includes a comparator.

4. The electromagnetic clutch according to claim 2, said switching means including a common-emitter type switching transistor (203) and an electromagnetic relay (204) having a normally closed contact (204a) which is connected between said battery (205) and said electromagnetic device, said common-emitter type switching transistor (203) and said electromagnetic relay (204, 204a) being connected in series between said battery (205) and ground.

5. The electromagnetic clutch according to claim 4 wherein said electromagnetic relay (204, 204a) is energized when said common-emitter type switching transistor (203) receives said third signal.

## Patentansprüche

1. Elektromagnetische Kupplung mit einem ersten drehbaren Teil (30) mit einer axialen Endplatte (33) aus magnetischem Material, einem zweiten drehbaren Teil (60), wobei eine Ankerplatte (70) aus magnetischem Material elastisch mit dem zweiten drehbaren Teil so verbunden ist, daß die Ankerplatte (70) zu einer beschränkten axialen Bewegung in der Lage ist, die Ankerplatte (70) der axialen Endplatte (33) des ersten drehbaren Teiles (30) mit einem Luftspalt dazwischen zugewandt ist, und einer elektromagnetischen Einrichtung, die mit dem ersten drehbaren Teil (30) verknüpft ist und betätigbar ist zum Anziehen der Ankerplatte (70) in Kontakt mit der axialen Endplatte derart, daß die Rotation des ersten drehbaren Teiles (30) auf das zweite drehbare Teil (60) durch die Ankerplatte (70) übertragen werden kann, wenn die elektromagnetische Einrichtung aktiviert ist, wobei die elektromagnetische Einrichtung mindestens zwei elektromagnetische Spulen (501, 502; 503, 504, 505) enthält und die mindestens zwei elektromagnetischen Spulen axial miteinander ausgerichtet sind;
dadurch gekennzeichnet, daß eine thermische Differenz zwischen einer und der anderen der mindestens zwei elektromagnetischen Spulen (501, 502; 503, 504, 505) erzeugt wird, wenn Wärme zu der elektromagnetischen Einrichtung von einer Kontaktoberfläche (331, 371) zwischen der axialen Endplatte (33) und der Ankerplatte (75) geleitet wird, wobei die mindestens zwei elektromagnetischen Spulen (501, 502; 503, 504, 505) in Reihe zwischen einer Batterie (205) und Masse geschaltet sind, ein Steuermittel (200) zum Steuern der Verbindung und der Trennung der elektromagnetischen Einrichtung mit/von der Batterie (205) vorgesehen ist, das Steuermittel (200) die elektromagnetische Einrichtung von der Batterie (205) trennt, wenn die thermische Differenz einen vorbestimmten Wert überschreitet, während die elektromagnetische Einrichtung aktiviert ist.

2. Elektromagnetische Kupplung nach Anspruch 1, bei der das Steuermittel ein Vergleichsmittel (201), ein Beurteilungsmittel (202) und ein Schaltmittel (203, 204, 204a) aufweist, das Vergleichsmittel (201) eine vorbestimmte Spannung mit einer Spannung an einem Punkt zwischen der einen und der anderen elektromagnetischen Spule der mindestens zwei elektromagnetischen Spulen vergleicht, das Vergleichsmittel (201) ein erstes Signal erzeugt, wenn eine Differenz zwischen der vorbestimmten Spannung und der Spannung an dem Punkt zwischen der einen und der anderen elektromagnetischen Spule der mindestens zwei elektromagnetischen Spulen eine vorbestimmte Potentialdifferenz überschreitet, das Beurteilungsmittel (202) ein zweites Signal empfängt, das darstellt, daß entweder die elektromagnetische Einrichtung aktiviert ist oder die elektromagnetische Einrichtung nicht aktiviert ist, das Beurteilungsmittel (202) beurteilt, ob die elektromagnetische Einrichtung von der Batterie getrennt wird oder nicht im Hinblick auf das zweite Signal, das Beurteilungsmittel (202) ein drittes Signal erzeugt, wenn das Beurteilungsmittel das erste Signal empfängt, während das Beurteilungsmittel das zweite Signal empfängt, das darstellt, daß die elektromagnetische Einrichtung aktiviert ist, das Schaltmittel (203, 203, 304a) die elektromagnetische Einrichtung von der Batterie trennt, wenn das Schaltmittel das dritte Signal empfängt.

3. Elektromagnetische Kupplung nach Anspruch 2, bei der das Vergleichsmittel einen Komparator aufweist.

4. Elektromagnetische Kupplung nach Anspruch 2, bei der das Schaltmittel einen Schalttransistor (203) mit Emitter auf Masse und ein elektromagnetisches Relais (204) mit einem normalerweise geschlossenen Kontakt (204a) aufweist, der zwischen der Batterie (205) und der elektromagnetischen Einrichtung verbunden ist, wobei der Schalttransistor (203) mit Emitter auf Masse und das elektromagnetische Relais (204, 204a) in Reihe zwischen der Batterie (205) und Masse geschaltet sind.

5. Elektromagnetische Kupplung nach Anspruch 4, bei der das elektromagnetische Relais (204, 204a) erregt wird, wenn der Schalttransistor (203) mit Emitter auf Masse das dritte Signal empfängt.

## Revendications

1. Embrayage électromagnétique comprenant un premier élément rotatif (30) ayant un plateau d'extrémité axiale (33) en matériau magnétique, un second élément rotatif (60), un plateau d'induit (70) en matériau magnétique relié par ressort audit second élément rotatif (60) de manière à ce que ledit plateau d'induit (70) soit capable de mouvement axial limité, ledit plateau d'induit (70) faisant face audit plateau d'extrémité axiale (33) dudit premier élément rotatif (30) avec un espace libre axial entre eux et un appareil électromagnétique associé audit premier élément rotatif (30) et opérationnel pour mettre en contact par attraction ledit plateau d'induit (70) avec ledit plateau d'extrémité axiale de sorte que la rotation dudit premier élément rotatif (30) puisse être transmise audit second élément rotatif (60) par l'intermédiaire dudit plateau d'induit (70) lorsque ledit appareil électromagnétique est activé, ledit appareil électromagnétique comprenant au moins deux bobines électromagnétiques (501, 502; 503, 504, 505), lesdites au moins deux bobines électromagnétiques étant alignées axialement;
caractérisé en ce que
un différentiel thermique entre l'une et l'autre bobines électromagnétiques desdites au moins deux bobines électromagnétiques (501, 502; 503, 504, 505) est généré lorsqu'une chaleur est propagée vers ledit appareil électromagnétique en provenance d'une surface de contact (331, 71) entre ledit plateau d'extrémité axiale (33) et ledit plateau d'induit (70), lesdites au moins deux bobines électromagnétiques (501, 502; 503, 504, 505) étant reliées en série entre une batterie (205) et la masse, des moyens de contrôle (200) étant fournis pour contrôler la connexion et la déconnexion dudit appareil électromagnétique à ladite batterie (205) lorsque ledit différentiel thermique dépasse une valeur prédéterminée alors que ledit appareil électromagnétique est activé.

2. Embrayage électromagnétique selon la revendication 1, lesdits moyens de contrôle comprenant des moyens de comparaison (201), des moyens d'analyse (202), et des moyens de commutation (203, 204, 204a), lesdits moyens de comparaison (201) comparant une tension prédéterminée à une tension à un point donné entre lesdites l'une et l'autre bobines électromagnétiques desdites au moins deux bobines électromagnétiques, lesdits moyens de comparaison (201) générant un premier signal lorsqu'un différentiel entre ladite tension prédéterminée et la tension au point donné entre lesdites l'une et l'autre bobines électromagnétiques desdites au moins deux bobines électromagnétiques dépasse une différence potentielle prédéterminée, lesdits moyens d'analyse (202) recevant un second signal qui signifie que soit ledit appareil électromagnétique est activé soit ledit appareil n'est pas activé, lesdits moyens d'analyse (202) analysant si ledit appareil électromagnétique sera ou ne sera pas déconnecté de la batterie en tenant compte dudit second signal, lesdits moyens d'analyse (202) générant un troisième signal lorsque lesdits moyens d'analyse reçoivent ledit premier signal tandis que lesdits moyens d'analyse reçoivent ledit second signal signifiant que ledit appareil électromagnétique est activé, lesdits moyens de commutation (203, 204, 204a) déconnectant ledit appareil électromagnétique de ladite batterie lorsque lesdits moyens de commutation reçoivent ledit troisième signal.

3. Embrayage électromagnétique selon la revendication 2 dans lequel ledit moyen de comparaison comprend un comparateur.

4. Embrayage électromagnétique selon la revendication 2, ledit moyen de commutation comprenant un transistor commutateur de type émetteur commun (203) et un relais électromagnétique (204) comportant un contact normalement fermé (204a) qui est relié à ladite batterie (205) et audit appareil électromagnétique, ledit transistor commutateur de type émetteur commun (203) et ledit relais électromagnétique (204, 204a) étant reliés en série entre ladite batterie (205) et la masse.

5. Embrayage électromagnétique selon la revendication 4 dans lequel ledit relais électromagnétique (204, 204a) est activé lorsque ledit transistor commutateur de type émetteur commun (203) reçoit le troisième signal.
